# EUROPEAN PATENT SPECIFICATION

(11) **EP 0 650 872 B1**
(45) Date of publication and mention of the grant of the patent: **19.03.1997**
(21) Application number: 94307696.8
(22) Date of filing: 19.10.1994
(51) Int. Cl.: B60R 22/10

(54) **A harness arrangement**
Eine Gurtanordnung
Un agencement de harnais

(30) Priority: 28.10.1993 AU PM2067/93
(43) Date of publication of application: 03.05.1995
(73) Proprietor: BRITAX CHILD-CARE PRODUCTS PTY. LTD., Sunshine 3020 Victoria (AU)
(72) Inventor: Lumley, Michael Andrew, Sunshine, Victoria (AU)
(74) Representative: Hollinghurst, Antony

(56) References cited:
- US-A- 4 429 916
- US-A- 4 660 889

## Description

This invention relates to a seat strap assembly comprising a pair of straps, that are each secured at their first ends to said seat, said straps having second ends extending to and through apertures in said seat, mutually inter-connectable coupling means on each one of said straps positioned so that they overlie said occupant when they connect together, an adjustment strap secured to the second end of each said strap, and locking means on said seat for releasably securing said adjustment strap so that said shoulder and lap straps may be loosened or tightened by changing the position of the adjustment strap with respect to said locking means.

The invention will find many applications, but primarily has been designed for use with respect to moulded infant seats which can be located within motor vehicles.

The use of such safety seats have become very widespread, and now in fact are required by law for infants of certain age ranges. Such safety seats normally comprise some form of harness or seat strap assembly which secures the infant to the seat. Harnesses generally comprise shoulder or sash straps, lap straps and a crutch strap. The strap portions are attached to a coupling means such as a conventional buckle which enables the harness to be assembled around and over an infant.

In order to ensure that the infant is safely restrained within the seat, the harness must be properly adjusted, and it is generally an aim of such safety seats to ensure that the harness adjustment is as simple as possible. An example of such harness adjustment means is shown in Australian Patent No 503602 (AU-B-23568/77) which allows the adjustment of the harness to be effected through a single pull strap. The arrangement shown in this patent specification works well, and has been used extensively.

However, the applicants have investigated alternative configurations, which provide the same ease of adjustment, and which also provide other advantages in relation to the load distribution to the various members associated with the harness.

Further harness arrangements are known from US-A-4 660 889 or US-A-4 429 916.

According to the invention, in a seat strap assembly of the type described above, the first ends of the straps are secured to the seat at respective attachment positions adjacent the shoulders of an occupant, and said apertures in said seat are adjacent to and either side of the waist of said occupant, whereby the portions of the two straps extending between said first ends and said coupling means comprise shoulder straps, and the portions of the two straps extending between said coupling and said apertures comprise lap straps.

The straps forming the lap and shoulder straps may comprise a single length of strap, with the first ends of the strap secured to the seat such that the centre portion of the strap extends behind the seat.

Preferably, the adjustment strap comprises a single strap which is secured to the strap portion as it extends behind the seat between the lap strap apertures. In the case of an infant seat where the infant's position is in a rearward facing position with respect to the vehicle, the releasable locking means is located at the head end of the seat where it is most accessible. Preferably, the locking means enables the adjustment strap to be pulled through in one direction, but prevents movement of the adjustment strap in the opposite direction. Clearly, with the seat strap adjustment as described, in impact circumstances, the adjustment strap would be placed under tension.

By pulling the adjustment strap, the strap portion that extends behind the seat is pulled, which in turn pulls both the lap and shoulder straps. As the adjustment strap is held centrally with respect to the seat, then the shoulder and lap straps either side of the infant are pulled evenly.

Preferably, the straps can be arranged to ensure that excessive loads are not applied to the releasable locking means. In the case of a small infant, with the harness fully adjusted, the portion of the strap which extends behind the seat from the lap strap apertures is reasonably lengthy, and therefore an acute angle may be formed between the strap which are located either side of the adjustment strap connection point. This means that any load applied during collision conditions will be applied more directly to the locking means. In the case of small infants, this is not unsafe.

In the case of infants of a larger size, such loading may be undesirable. However, as the infant is of a larger size with the strap portions secured in a higher shoulder position, the effective length of the strap portion is reduced such that the strap extending behind the seat is also shorter resulting in an obtuse angle between the straps either side of the attachment point of the adjustment strap. The sum of the force vectors in this circumstance result in more forces being applied to the seat without a significant increase in the force being applied to the locking means.

An embodiment of the invention will be described, by way of example, with reference to the accompanying drawings, in which:
Fig 1 shows a top plan view of a safety seat with an installed harness and
Fig 2 shows a rear plan view of a safety seat with the harness installed.

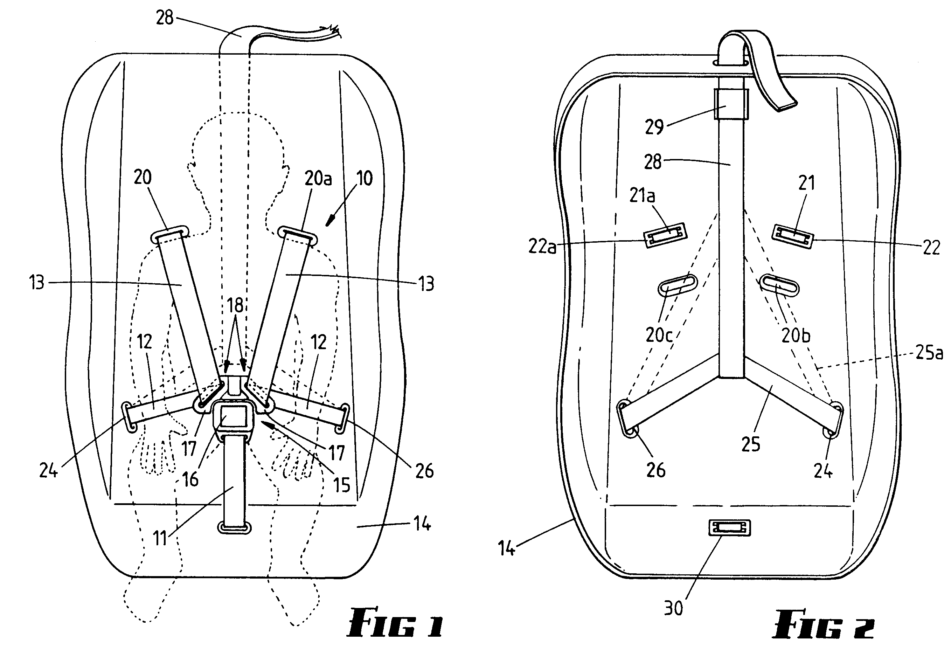

As seen in Fig 1, the harness 10 comprises a crutch strap 11, a pair of lap straps 12 and a pair of shoulder straps 13. The coupling 15 comprises a three way buckle having a female member 16 and a pair of male members 17. Each of the male members 17 is provided with an aperture for slidably locating a strap therethrough.

In accordance with this embodiment, the lap and shoulder straps 12 and 13 comprise a single strap which are secured to the seat 14 at a position adjacent the shoulders of the occupant. In this embodiment, there are provided a number of apertures 20 that are positioned either side of the centre line of the seat 14. As seen in Fig 2, the end of the harness strap 21 is attached to a three bar buckle 22, the aperture 20 being sized such that the three bar buckle cannot pass therethrough, and is held against the rear surface of the seat 14. The strap is fed through the aperture 18 on the first male member 17, and then exits the seat via aperture 24. The centre portion 25 of the strap extends across the rear of the seat 14, the centre portion 25 extending between two apertures 24 and 26. The strap then is located through an aperture 18 of the second male portion 17, whereupon the end of the strap is secured to the seat by passing through an aperture 20a and having an end 21a secured to a three bar buckle 22a.

As seen in Fig 2, an adjustment strap 28 is secured to the centre portion 25 and passes through a releasable locking means 29. The releasable locking means 29 has a mechanism which allows the adjusting strap 28 to be pulled through it and away from the seat 14, but when tension is placed on the adjustment strap 28 between the adjustable locking means and the centre portion 25, the adjustable locking means 29 restrains any movement of the adjustment strap 28.

As seen in Fig 2, there are provided a number of apertures 20, 20a, 20b and 20c to which the ends 21 of the strap can be secured. The apertures 20 and 20a and apertures 20b and 20c are positioned to accommodate infants of various sizes, to ensure that there is minimal movement of the infant within the seat before abutment of the shoulders against the shoulder straps 13. In the case of a smaller infant, the centre portion 25 will be much larger as shown by the dashed outline 25a in Fig 2, which will result in a relatively small angle between the portions of the strap either side of the adjustment straps 28 attachment point. This configuration will result in loads being applied more directly to the releasable locking means 29.

In the case of a larger child as is shown in Figs 1 and 2, the centre portion 25 will be much shorter, and accordingly the angle between the strap either side of the adjustment straps 28 connection point will be obtuse. This results in a smaller component of force being applied to the releasable locking means 29 with more of the force being absorbed by the seat 14.

Finally, the crutch strap 11 is secured to the seat 14 via a three bar buckle 30 and the length of the crutch strap 11 may or may not be extendable.

In operation, the coupling means 15 is released which therefore allows the child to be placed in the seat 14. The crutch strap is brought into position in front of the child, and both pairs of lap and shoulder straps 12 and 13 are positioned over the child so that the male members 17 can engage the female member 16. In order to adjust the tension of both the lap and shoulder straps 12 and 13, the adjustment strap 28 is pulled at its end which results in the centre portion 25 being pulled which again causes both the lap and shoulder straps 12 and 13 to be shortened and be tightened. Therefore, a simple adjustment of the harness 10 can be obtained by one action.

As will be seen from the above description, the invention provides a convenient arrangement of the harness which allows easy use and adjustment. In addition, this arrangement has a feature of reducing the load applied to the releasable locking means 29 as the size of the child increases.

## Claims

1. A seat strap assembly (10) comprising a pair of straps (12, 13), that are each secured at their first ends to said seat (14), said straps (12, 13) having second ends extending to and through apertures (24, 26) in said seat (14),
mutually interconnectable coupling means (15) on each one of said straps (12, 13) positioned so that they overlie said occupant when they connect together,
an adjustment strap (28) secured to the second end of each said strap (12, 13), and
locking means (29) on said seat (14) for releasably securing said adjustment strap (28) so that said shoulder and lap straps (13, 12) may be loosened or tightened by changing the position of the adjustment strap (28) with respect to said locking means (29),
characterised in that the first ends of the straps (12, 13) are secured to the seat at respective attachment positions (20, 20a) adjacent the shoulders of an occupant, and said apertures (24, 26) in said seat (14) are adjacent to and either side of the waist of said occupant, whereby the portions of the two straps (12, 13) extending between said first ends and said coupling means (15) comprise shoulder straps (13), and the portions of the two straps extending between said coupling and said apertures (24, 26) comprise lap straps (12).

2. A seat strap assembly according to claim 1 further comprising a crutch strap (11) secured at one end to said seat (14), the other end securable to said coupling means (15).

3. A seat strap assembly according to claim 2 wherein said coupling means (15) comprises a three way buckle where the female member (16) of said buckle is secured to the end of said crutch strap (11), and the two male members (17) attached to one each of said straps (12, 13).

4. A seat strap assembly according to claim 3 wherein each of the male members (17) of said buckle have belt receiving apertures for engagement on each of said straps (12, 13).

5. A seat strap assembly according to any one of the preceding claims wherein said second ends of said straps (12, 13) are connected.

6. A seat strap assembly according to claim 5 wherein said shoulder and lap straps (13, 12) are all formed from a single strap that is secured at each end to said first positions with the centre portion of said single strap extending between said apertures (24, 26) behind said seat.

7. A seat strap assembly according to any one of the preceding claims wherein said adjustment strap (28) comprises a single strap extending substantially along the vertical centre line of said seat (14).

8. A seat strap assembly according to claim 7 wherein the angle formed between said second ends of said strap (12, 13) either side of the connection point of said adjustment strap (28) increases as the size of the occupant increases, thereby resulting in less load being applied to said adjustment strap (28) when load is applied to said shoulder and lap straps (13, 12) by forward movement of the occupant.

9. A seat strap assembly according to any one of the preceding claims wherein said locking means (29) comprises a lock that allows said adjustment strap (28) to be pulled freely through it to tighten said shoulder and lap straps (13, 12), and automatically locks against said adjustment strap (28) to prevent movement in the opposite direction.

10. A seat strap assembly according to any one of the preceding claims wherein said locking means (29) is located at the head end of said seat (14) on its rear surface.

11. A seat strap assembly according to any one of the preceding claims wherein said shoulder straps (13) and crutch strap (11) are secured to said seat (14) by three-bar buckles (22, 22a) attached at the end of said straps (13), the straps locating through apertures (20, 20a) with said three-bar buckles (22, 22a) abutting against said seat (14) thereby holding said straps (13) with respect to said seat (14).

## Patentansprüche

1. Eine Sitzgurtanordnung (10), aufweisend: ein Paar von Gurten (12, 13), von denen jeder Gurt (12, 13) an seinem ersten Ende an dem Sitz (14) befestigt ist, wobei jeder Gurt (12, 13) ein zweites Ende aufweist, das sich zu einer Öffnung (24) in dem Sitz (14) und durch die Öffnung (24) in dem Sitz (14) bzw. das sich zu einer Öffnung (26) in dem Sitz (14) und durch die Öffnung (26) in dem Sitz (14) erstreckt,
eine Kopplungseinrichtung (15) an jedem der Gurte (12, 13), wobei die Kopplungseinrichtungen (15) gegenseitig miteinander verbindbar und so angeordnet sind, daß sie, wenn sie miteinander verbunden sind, auf dem Insassen liegen,
einen Verstellgurt (28), der an dem zweiten Ende eines jeden Gurtes (12, 13) befestigt ist, und
eine Verriegelungseinrichtung (29) an dem Sitz (14) zum lösbaren Befestigen des Verstellgurtes (28), so daß der Schultergurt (13) und der Bauchgurt (12) durch Ändern der Position des Verstellgurtes (28) in Bezug auf die Verriegelungseinrichtung (29) gelockert oder festgezogen werden können,
**dadurch gekennzeichnet,**
daß das jeweilige erste Ende der Gurte (12, 13) an dem Sitz an einer zugeordneten Anbringungsposition (20 bzw. 20a) befestigt ist, wobei diese Anbringungspositionen (20, 20a) den Schultern eines Insassen benachbart sind, und daß die Öffnungen (24, 26) in dem Sitz (14) der Taille und beiden Seiten der Taille des Insassen benachbart sind, so daß der jeweilige Bereich der zwei Gurte (12, 13), der sich zwischen dem ersten Ende und der Kopplungseinrichtung (15) erstreckt, einen Schultergurt (13) aufweist und der jeweilige Bereich der zwei Gurte, der sich zwischen der Kopplung und der jeweiligen Öffnung (24 bzw. 26) erstreckt, einen Bauchgurt (12) aufweist.

2. Eine Sitzgurtanordnung nach Anspruch 1, die ferner einen ein mittleres Zwischenstück bildenden Gurtabschnitt (11) aufweist, der an einem Ende an dem Sitz (14) befestigt ist, wobei das andere Ende an der Kopplungseinrichtung (15) befestigbar ist.

3. Eine Sitzgurtanordnung nach Anspruch 2, bei welcher die Kopplungseinrichtung (15) einen Dreiwege-Gurtschieber aufweist, wobei der weibliche Teil (16) des Gurtschiebers an dem Ende des ein mittleres Zwischenstück bildenden Gurtabschnitts (11) befestigt ist und wobei je einer von zwei männlichen Teilen (17) an jedem der Gurte (12, 13) angebracht ist.

4. Eine Sitzgurtanordnung nach Anspruch 3, bei welcher jeder der männlichen Teile (17) des Gurtschiebers eine Gurtaufnahmeöffnung zum Ineingriffgelangen an einem jeden der Gurte (12, 13) aufweist.

5. Eine Sitzgurtanordnung nach einem der vorhergehenden Ansprüche, bei welcher die zweiten Enden der Gurte (12, 13) verbunden sind.

6. Eine Sitzgurtanordnung nach Anspruch 5, bei welcher die Schultergurte (13) und die Bauchgurte (12) alle aus einem einzigen Gurt gebildet sind, der an jedem Ende an der jeweiligen ersten Position befestigt ist, wobei der mittlere Bereich des einzigen Gurtes sich zwischen den Öffnungen (24, 26) hinter dem Sitz erstreckt.

7. Eine Sitzgurtanordnung nach einem der vorhergehenden Ansprüche, bei welcher der Verstellgurt (28) einen einzigen Gurt aufweist, der sich im wesentlichen entlang der vertikalen Mittellinie des Sitzes (14) erstreckt.

8. Eine Sitzgurtanordnung nach Anspruch 7, bei welcher der Winkel, der zwischen den zweiten Enden der Gurte (12, 13) beiderseits der Verbindungsstelle des Verstellgurtes (28) gebildet ist, zunimmt, wenn die Größe des Insassen zunimmt, wodurch sich ergibt, daß eine geringe Belastung auf den Verstellgurt (28) aufgebracht wird, wenn die Belastung auf die Schultergurte (13) und die Bauchgurte (12) durch Vorwärtsbewegung des Insassen aufgebracht wird.

9. Eine Sitzgurtanordnung nach einem der vorhergehenden Ansprüche, bei welcher die Verriegelungseinrichtung (29) eine Verriegelung aufweist, welche es ermöglicht, daß der Verstellgurt (28) frei durch sie gezogen wird, um die Schultergurte (13) und die Bauchgurte (12) festzuziehen, und welche automatisch gegenüber dem Verstellgurt (28) verriegelt, um eine Bewegung in der entgegengesetzten Richtung zu verhindern.

10. Eine Sitzgurtanordnung nach einem der vorhergehenden Ansprüche, bei welcher die Verriegelungseinrichtung (29) an dem Kopfende des Sitzes (14) an dessen Rückseite angeordnet ist.

11. Eine Sitzgurtanordnung nach einem der vorhergehenden Ansprüche, bei welcher die Schultergurte (13) und der ein mittleres Zwischenstück bildende Gurtabschnitt (11) an dem Sitz (14) durch Dreistab-Gurtschieber (22, 22a) befestigt sind, die an dem Ende der Gurte (13) angebracht sind, wobei die Gurte durch Öffnungen (20, 20a) angeordnet sind und wobei die Dreistab-Gurtschieber (22, 22a) gegen den Sitz (14) anstoßen, wodurch sie die Gurte (13) in Bezug auf den Sitz (14) halten.

## Revendications

1. Un ensemble de harnais de siège (10) comprenant une paire de sangles (12, 13), chacune d'elles fixées par leurs premières extrémités audit siège (14), lesdites sangles (12, 13) ayant des secondes extrémités s'étendant jusqu'à des ouvertures (24, 26) dans ledit siège (14) et à travers celles-ci,
un moyen d'accouplement (15) pouvant être conjugué mutuellement sur chacune desdites sangles (12, 13), positionnées de manière à recouvrir ledit occupant lorsqu'elles sont reliées mutuellement,
une sangle d'ajustement (28) fixée sur la seconde extrémité de chacune desdites sangles (12, 13), et
un moyen de verrouillage (29) sur ledit siège (14) pour fixer de manière amovible ladite sangle d'ajustement (28) de manière que lesdites sangles d'épaule et ventrale (13, 12) puissent être serrées ou desserrées en modifiant la position de la sangle d'ajustement (28) par rapport audit moyen de verrouillage (29),
caractérisé en ce que les premières extrémités des sangles (12, 13) sont fixées au siège dans des positions d'attache respectives (20, 20a) adjacentes aux épaules d'un occupant, et que lesdites ouvertures (24, 26) dudit siège (14) sont adjacentes à et de chaque côté de la taille dudit occupant, de manière que les parties des deux sangles (12, 13) s'étendant entre lesdites premières extrémités et ledit moyen d'accouplement (15) comprennent les sangles d'épaule (13), et les parties des deux sangles s'étendant entre ledit accouplement et lesdites ouvertures (24, 26) comprennent les sangles ventrales (12).

2. Un ensemble de harnais de siège selon la revendication 1, comprenant, en outre, une sangle d'entrejambes (11) fixée à une extrémité sur ledit siège (14), l'autre extrémité pouvant être fixée sur ledit moyen d'accouplement (15).

3. Un ensemble de harnais de siège selon la revendication 2, dans lequel ledit moyen d'accouplement (15) comprend une boucle à trois voies où l'élément femelle (16) de ladite boucle est fixé à l'extrémité de ladite sangle d'entrejambes (11) et les deux éléments mâles (17) sont fixés sur l'une de chacune desdites sangles (12, 13).

4. Un ensemble de harnais de siège selon la revendication 3, dans lequel chacun des éléments mâles (17) de ladite boucle comprend des ouvertures de réception de sangle pour l'engagement de chacune desdites sangles (12, 13).

5. Un ensemble de harnais de siège selon l'une quelconque des revendications précédentes, dans lequel lesdites secondes extrémités desdites sangles (12, 13) sont reliées.

6. Un ensemble de harnais de siège selon la revendication 5, dans lequel lesdites sangles d'épaule et ventrale (13, 12) sont toutes réalisées à partir d'une sangle unique qui est fixée à chaque extrémité dans lesdites premières positions de manière que la partie centrale de ladite sangle unique s'étende entre lesdites ouvertures (24 26) derrière ledit siège.

7. Un ensemble de harnais de siège selon l'une quelconque des revendications précédentes, dans lequel ladite sangle d'ajustement (28) comprend une sangle unique s'étendant sensiblement le long de l'axe vertical dudit siège (14).

8. Un ensemble de harnais de siège selon la revendication 7, dans lequel l'angle formé entre lesdites secondes extrémités de ladite sangle (12, 13) de chaque côté du point de raccordement de ladite sangle d'ajustement (28) augmente en fonction de l'augmentation de la taille de l'occupant, de sorte qu'il en résulte une réduction de la charge appliquée sur ladite sangle d'ajustement (28) lorsque la charge est appliquée sur lesdites sangles d'épaule et ventrale (13, 12) par le mouvement en avant de l'occupant.

9. Un ensemble de harnais de siège selon l'une quelconque des revendications précédentes, dans lequel ledit moyen de verrouillage (29) comprend un verrou qui permet de tirer librement ladite sangle d'ajustement (28) à travers lui pour serrer lesdites sangles d'épaule et ventrale (13, 12) et se bloque automatiquement contre ladite sangle d'ajustement (28) pour empêcher un mouvement dans la direction opposée.

10. Un ensemble de harnais de siège selon l'une quelconque des revendications précédentes, dans lequel ledit moyen de verrouillage (29) est situé à l'extrémité de tête dudit siège (14), sur sa surface arrière.

11. Un ensemble de harnais de siège selon l'une quelconque des revendications précédentes, dans lequel lesdites sangles d'épaule (13) et d'entrejambes (11) sont fixées sur ledit siège (14) par des boucles à trois barres (22, 22a) fixées à une extrémité desdites sangles (13), les sangles passant dans des ouvertures (20, 20a) de manière que lesdites boucles à trois barres (22, 22a) viennent en butée contre ledit siège (14) afin de maintenir ainsi lesdites sangles (13) par rapport audit siège (14).
